# EUROPÄISCHE PATENTSCHRIFT

(11) **EP 0 577 942 B1**
(45) Veröffentlichungstag und Bekanntmachung des Hinweises auf die Patenterteilung: **13.12.1995**
(21) Anmeldenummer: 93107238.3
(22) Anmeldetag: 05.05.1993
(51) Int. Cl.: B01D 33/04, B01D 33/46, B01D 33/333

(54) **Filtermittel**
Filter means
Moyens de filtration

(30) Priorität: 30.06.1992 DE 4221392
(43) Veröffentlichungstag der Anmeldung: 12.01.1994
(73) Patentinhaber: HYDAC TECHNOLOGY GMBH, 66273 Sulzbach (DE)
(72) Erfinder: Teckentrup, Heinrich, W-66123 Saarbrücken (DE)
(74) Vertreter: Patentanwälte Bartels und Partner

(56) Entgegenhaltungen:
- FR-A- 2 503 756
- NL-C- 19 569
- US-A- 1 890 251
- US-A- 3 288 296

## Beschreibung

Die Erfindung betrifft ein Filtermittel mit den Merkmalen des Oberbegriffs des Anspruches 1.

Dahingehende Filtermittel finden bei Bandfilteranlagen Verwendung, wie sie beispielsweise in der DE-PS 39 10 930 beschrieben sind und die zum Abfiltrieren einer Flüssigkeit aus einer Suspension dienen.

In der US-A-3,288,296 ist ein gattungsgleiches Filtermittel beschrieben. Bei diesem bekannten Filtermittel sind die einzelnen Filterelemente, die ein Behältnis der Bandfilteranlage für das Filtrat beim Überfahren dieses Behältnisses abdecken und mithin von der zu reinigenden Suspension trennen, unmittelbar aus dem Filtermaterial selbst gebildet, das segmentartig zusammengesetzt das Endlosband bildet. Die beiden miteinander über eine Zwischenschiene verbundenen winkelförmigen Endstücke sind von einem U-Profil jeweils umgriffen, so daß über das Endlosband hinausstehende Mitnehmerelemente gebildet sind, die dem Schmutzaustrag, insbesondere einem sogenannten Schrägaustrag bei Bandfilteranlagen, dienen.

Die bekannten Mitnehmerelemente weisen an ihren freien Enden jeweils einen Mitnahmezapfen auf, der fest mit einem Verbindungsglied einer Kette verbunden ist, die ein Führungsteil zum Bewegen des Endlosbandes bildet. Die beiden das Endlosband randseitig begrenzenden Ketten werden von einer Umlenkrolle angetrieben, die hierfür endseitig jeweils einen Antriebskranz in Form eines Zahnkranzes aufweist.

Dahingehende Kettentriebe unterliegen einem Verschleiß und es kommt relativ häufig zu einem Versagen der Kette, was zu ungewollten Stillstandszeiten beim Betrieb der Filteranlagen führt. Insbesondere das Anfahren der jeweiligen Anlage mit dem bekannten Filtermittel geschieht durch den Kettentrieb bedingt nicht völlig ruckfrei, so daß es im randseitigen Bereich des Filtermaterials zu Aufwerfungen kommen kann und damit zu einem Eindringen der ungefilterten Suspension in das angesprochene Behältnis für das Filtrat, was das Filtrierergebnis und die Filtrierleistung beeinträchtigt.

Durch die US-A-1,890,251 ist ein anderes Filtermittel bekannt, das nicht aus einzelnen Segmenten zusammengesetzt ist, sondern vielmehr ein durchgehendes Endlosband bildet. Das bekannte Filterband weist auf seiner Innenseite stabartige Mitnehmerelemente auf, die endseitig mit einer Fahrrolle versehen sind. Diese bekannten Mitnehmerelemente dienen nicht dem Schmutzaustrag, sondern bilden mit den jeweiligen Fahrrollen das Führungsteil für das Bewegen des Endlosbandes. Die stabartigen Mitnehmerelemente weisen zu ihren freien Enden hin einen Eingriffsbereich für den Eingriff eines Antriebskranzes auf, der längs seines Außenumfanges hierfür gebogene zahnartige Vorsprünge hat.

Ist dieses bekannte Filtermittel an einer Stelle, beispielsweise durch starke Verschmutzung, unbrauchbar geworden, ist das gesamte Filtermittel gegen ein neues auszutauschen. Ferner können durch die auftretenden Beanspruchungen beim Betrieb der Anlage die vorstehenden Zähne an den Antriebskränzen brechen, was wiederum zu ungewollten Stillstandszeiten der Anlage führt.

Bei einem weiteren bekannten Filtermittel nach der FR-A-2 503 756 sind die filternden Einzelelemente, die starr ausgebildete Filterkästen sind, über Gelenk-Querstäbe für eine Umlenkung entlang von Umlenkrollen gelenkig miteinander verbunden. Zum Antrieb der Einzelelemente ragen die beiden Enden der Quer-Gelenkstäbe über das Endlosband vor und greifen in umfangsseitig am jeweiligen Antriebskranz der Umlenkrollen angeordnete Ausnehmungen ein. Zwar weist dieses bekannte Filtermittel für einen Schmutzaustrag über das Endlosband vorstehende, durch die Enden der Filterkästen gebildete Mitnehmerelemente auf, die jedoch an den Stellen der Umlenkung des Endlosbandes die jeweilige Gelenkstelle in der Art einer Zangenbewegung freigeben, die vom eigentlichen Filtermittel nicht mehr abgedeckt eine nicht erwünschte Eindringstelle für Verunreinigungen bildet, so daß das dahingehend bekannte Filtermittel bei Bandfilteranlagen der üblichen Art nicht einsetzbar und nur für einen groben Schmutzaustrag geeignet ist.

Ausgehend von diesem Stand der Technik liegt der Erfindung die Aufgabe zugrunde, ein Filtermittel für den Einsatz bei Bandfilteranlagen zu schaffen, mit dem ungewollte Verschmutzungen des Filtrates und Beschädigungen des empfindlichen Filtermaterials vermieden sind. Eine dahingehende Aufgabe wird mit den Merkmalen des Anspruches 1 in seiner Gesamtheit gelöst.

Dadurch, daß gemäß dem kennzeichnenden Teil des Anspruches 1 das Führungsteil mindestens eine Fahrrolle und ein T-förmiges Gabelstück aufweist, dessen Gabelenden ein Paar miteinander verbundener Endstücke umfaßt, daß der jeweilige Mitnahmezapfen für einen Eingriff mit umfangsseitig am jeweiligen Antriebskranz angeordneten Ausnehmungen vorgesehen ist und daß das Filtermaterial eines jeden Einzelelementes zwischen zwei Abdeckplatten mit miteinander benachbart gegenüberliegenden Durchlässen aufgenommen ist, die von dem Filtermaterial abgedeckt sind, ist über die Fahrrollen eine sichere Führung des Endlosbandes gewährleistet, so daß dieses sich beispielsweise von dem angesprochenen Behältnis der Filteranlage nicht abheben kann. Ungewollte Verschmutzungen des Filtrates sind somit vermieden. Die auf der Oberseite des Endlosbandes vorstehenden einander paarweise zugewandten Endstücke verbinden nicht nur die einzelnen Abdeckplatten miteinander, sondern können gleichzeitig als Mitnehmerelemente für den Schmutz austrag verwendet werden.

Da die Gabelstücke mit ihren Mitnahmezapfen umfangsseitig in Ausnehmungen des jeweiligen Antriebskranzes eingreifen, ist ein Abbrechen von Zähnen mit Sicherheit vermieden. Ferner wird mit der erfindungsgemäßen Antriebskonzeption ein ruckfreier Betrieb gewährleistet, was das Filtermittel schont. Sind Teile des Filtermittels verschmutzt, brauchen nur die dahingehenden filtrierenden Einzelelemente ausgetauscht zu werden und die Anlage ist wiederum betriebsbereit.

Bei dem erfindungsgemäßen Filtermittel ist das Filtermaterial zwischen den Abdeckplatten mit einander benachbart gegenüberliegenden Durchlässen aufgenommen, die von dem Filtermaterial abgedeckt sind. Die Abdeckplatten schützen hierbei das unter Umständen empfindliche Filtermaterial vor Beschädigungen.

Bei einer weiteren bevorzugten Ausführungsform weisen die Abdeckplatten thermoplastisch verarbeitbare Kunststoffe auf, die besonders einfach und kostengünstig verarbeitbar sind. Vorzugsweise besteht der Kunststoff aus einem Polyester mit Urethan oder aus einem Polyvinylchlorid oder aus einer Kombination dieser Materialien.

Bei einer weiteren besonders bevorzugten Ausführungsform sind bei dem erfindungsgemäßen Filtermittel die einander gegenüberliegenden und das jeweilige Filtermaterial zwischen sich aufnehmenden Abdeckplatten thermisch miteinander verschweißt. Hierdurch läßt sich ein besonders sicherer Verbund zwischen den einzelnen Komponenten des Filtermittels herstellen.

Im folgenden ist das erfindungsgemäße Filtermittel anhand der Zeichnung näher erläutert.

Es zeigen:
- Fig.1: eine Draufsicht auf einen Teil (3 Segmente) des Filtermittels;
- Fig.2: einen Schnitt längs der Linie II-II in Fig.1;
- Fig.3: eine verbesserte Darstellung eines Teiles (Segment) des Filtermittels in Draufsicht;
- Fig.4: einen Schnitt längs der Linie IV-IV in Fig.3;
- Fig.5: eine Seitenansicht eines Antriebskranzes für den Antrieb des Filtermittels.

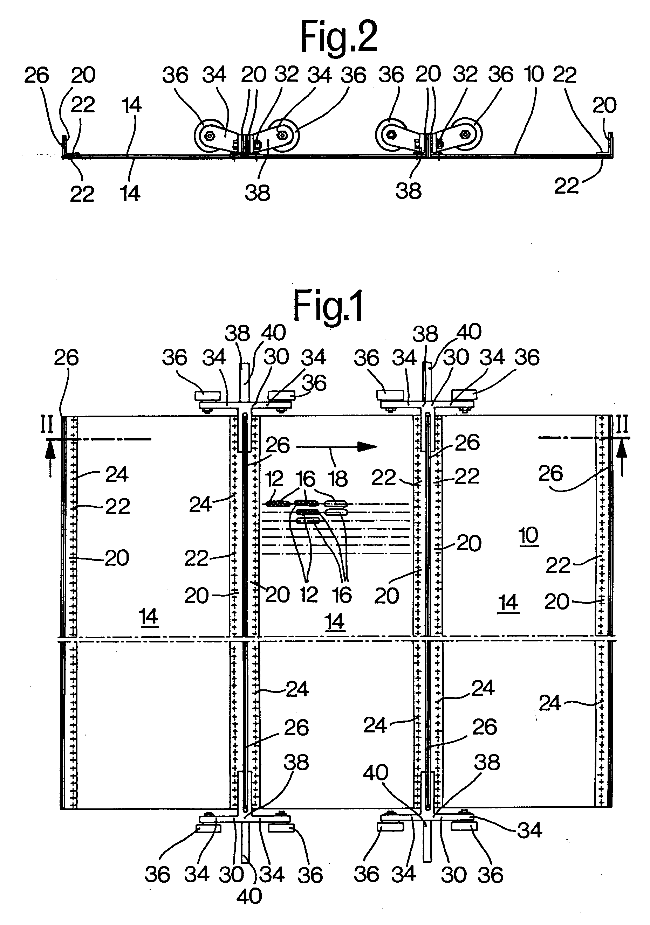

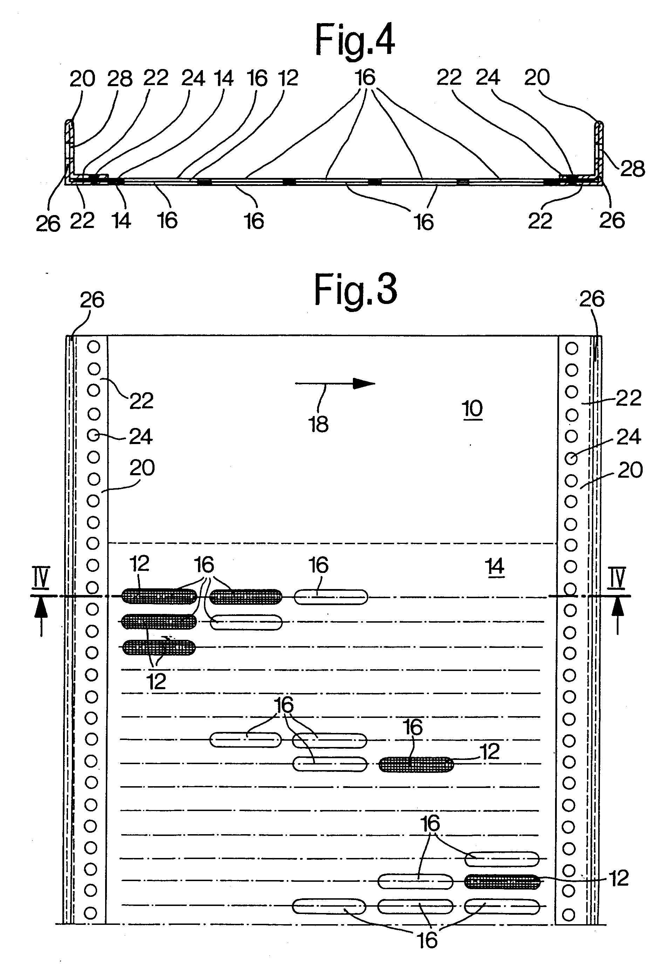

Das Filtermittel besteht aus einem antreibbaren, als Ganzes mit 10 bezeichneten Endlosband, von dem in den Fig.1 und 2 jeweils drei Segmente dargestellt sind. Wie insbesondere die Fig.3 und 4 zeigen, weist jedes Segment ein Filtermaterial 12 auf, das zwischen zwei Abdeckplatten mit einander benachbart gegenüberliegenden Durchlässen 16 aufgenommen ist, die von dem Filtermaterial 12 abgedeckt sind. Der Einfachheit halber sind in den Fig.1 und 3 nicht alle Durchlässe 16 eingezeichnet.

Das Filtermaterial des erfindungsgemäßen Filtermittels besteht aus einem feinmaschigen oder feinporigen Gitter und/oder Sieb und/oder Gewebe aus Metall und/oder Kunststoff und/oder Textilien. Bei dem hier vorliegenden Ausführungsbeispiel findet als Filtermaterial 12 ein Metalldrahtgewebe Anwendung, das von der Firma Spörl GmbH & Co KG unter dem Warenzeichen "BETAMESH" vertrieben wird. Dieses Metalldraht-Filtergewebe BETAMESH ist aus allen verwebbaren Werkstoffen erstellbar, besteht jedoch vorwiegend aus 1.4401/AISI 316 rostfreiem Stahldraht. Die absolute Filterfeinheit dieses Metalldraht-Filtergewebes liegt, je nach Anwendungsfall, zwischen 15 bis 89»m. Das Filtergewebe 12 bildet eine rechteckförmige Matte aus und ist von den rechteckförmigen Abdeckplatten 14 randseitig vollständig umfaßt. Der einfacheren Darstellung wegen sind in den Fig.1 und 3 nicht alle Durchlässe 16 mit dem Filtermaterial 12 abgedeckt eingezeichnet.

Die Durchlässe 16 sind in Reihe hintereinander und nebeneinander angeordnet und weisen eine längliche Form auf, die in Laufrichtung 18 gesehen beidseitig in einem kreisrunden Abschluß enden. Durch die gewählte Anordnung steht eine entsprechend große Querschnittsfläche für den Filtriervorgang zur Verfügung. Die jeweilige Abdeckplatte 14 weist ein quersteifes Gewebe aus Polyester in Kette und Schuß mit zwei Gewebelagen auf. Die dem Betrachter der Fig.1 und 3 zugewandte Tragseite ist mit ca. 0,3 mm Urethan beschichtet, wohingegen die dem Betrachter abgekehrte Laufseite des Endlosbandes 10 urethanimprägniert ist. Zum Herstellen des Verbundes von Abdeckplatten 14 mit Filtermaterial 12 wird dieser einer Schweißtemperatur von ca. 170°C mit einem Anpreßdruck von 7 bar ausgesetzt, wobei die Haltezeit 5 Min. beträgt. Anschließend ist eine feste, unlösbare Verbindung eines Segmentes gegeben. Das jeweilige Segment ist flexibel und läßt sich längs von Umlenkrollen in einer Bandfilteranlage (nicht dargestellt) entsprechend umlenken. Die jeweilige Abdeckplatte 14 kann auch aus Polyvinylchlorid bestehen.

In Laufrichtung 18 des Endlosbandes 10 gesehen ist die jeweilige Abdeckplatte 14 beidseitig mit einem Endstück 20 versehen, das mit dem nächsten, ihm zugewandten Endstück 20 (Fig.1) verbunden ist. Das jeweilige Endstück 20 bildet eine rechtwinklige Metalleiste aus, deren Querschnittsform (Fig.4) durch entsprechendes Biegen aus einem rechteckförmigen Blechzuschnitt gewinnbar ist. Ein jedes Endstück 20 bildet zur Aufnahme der Tragseite eines Segmentes in Form der in der Fig.4 gesehen oben dargestellten Abdeckplatte 14 zwei Schenkelstücke 22 aus, die eine Art Klemmspalt begrenzen, in den die obere Abdeckplatte 14 mit ihrem randseitigen Bereich festlegbar ist. Durch eine Schraubverbindung 24, die durch einzelne, quer zur Laufrichtung 18 angeordnete Schrauben gebildet ist, wird dann ein fester Verbund zwischen dem winkelförmigen Endstück 20 und dem jeweiligen Segment hergestellt. Wie insbesondere die Fig.2 zeigt, bilden die miteinander verbundenen Endstücke 20 über das Endlosband 10 hinausstehende Mitnehmerelemente 26 aus, die zum einen dem Schmutzaustrag dienen und zum anderen die Einzelsegmente zu dem Endlosband 10 zusammenfügen. Um die hochstehenden Winkelteile der einander benachbart gegenüberliegend angeordneten Endstücke 20 miteinander zu verbinden, ist ebenfalls eine Schraubverbindung (nicht dargestellt) vorgesehen, von der in der Fig.4 die Durchgangsbohrung 28 ersichtlich ist.

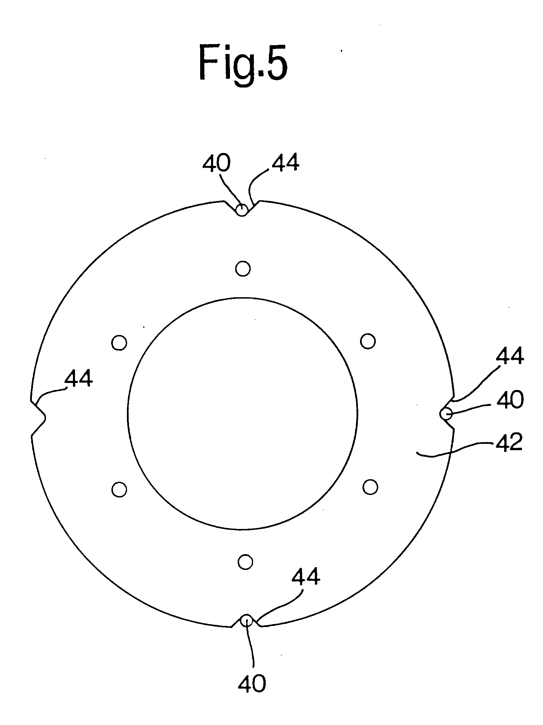

Quer zur Laufrichtung 18 ist an den freien Enden des Endlosbandes 10 endseitig ein T-förmiges Gabelstück 30 angeordnet, dessen Gabelenden ein Paar miteinander verbundene Endstücke 20 umfaßt und mit diesen mittels einer Schraubverbindung 32 fest verbunden ist (Fig.2). Wie insbesondere die Fig.2 zeigt, weist das Gabelstück 30 zwei miteinander ein "V" bildende Verlängerungen 34 auf, die endseitig jeweils mit einer drehbaren Fahrrolle 36 verbunden sind. Diese Fahrrollen 36 untergreifen zur Führung des Endlosbandes 10 eine entsprechende Führungsschiene (nicht dargestellt) innerhalb der Bandfilteranlage. Verlängerungen 34 und Fahrrollen 36 sind mithin Teil eines Führungsteiles 38, das jeweils einen Mitnahmezapfen 40 aufweist, der von der randseitigen Begrenzung des Endlosbandes 10 ins Freie absteht. Der jeweilige Mitnahmezapfen 40 ist in Eingriff mit einem Antriebskranz 42 bringbar, wie er in Fig.5 dargestellt ist. Hierzu weist der Antriebskranz 42, der jeweils endseitig mit einer zylinderförmigen Umlenkrolle (nicht dargestellt) für das Endlosband 10 fest verbunden ist, umfangsseitig und in gleichen radialen Abständen voneinander angeordnet vier Ausnehmungen 44 auf, die für den Antrieb des Endlosbandes 10 die jeweiligen Mitnahmezapfen 40 mitführen.

Die vorstehende Beschreibung und die Zeichnung beschränken sich nur auf die Angabe von Merkmalen, die für die beispielsweise Verkörperung der Erfindung wesentlich sind.
Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Filtermittel, bestehend aus einem antreibbaren flexiblen Endlosband (10), das um mit mindestens einem Antriebskranz (42) versehene Umlenkrollen führbar ist und das aus Einzelelementen zusammengesetzt ist, die jeweils ein Filterelement bestehend aus einem Filtermaterial (12) aufweisen und die jeweils in Laufrichtung (18) des Endlosbandes (10) beidseitig mit einem winkelförmigen Endstück (20) versehen sind, das mit dem nächsten, ihm zugewandten Endstück (20) verbunden ist, wobei die miteinander verbundenen Endstücke (20) über das Endlosband (10) hinausstehende Mitnehmerelemente (26) bilden, die an ihren beiden freien Enden jeweils einen Mitnahmezapfen (40) aufweisen, der Teil eines Führungsteiles (38) ist, dadurch gekennzeichnet, daß das Führungsteil (38) mindestens eine Fahrrolle (36) und ein T-förmiges Gabelstück (30) aufweist, dessen Gabelenden ein Paar miteinander verbundener Endstücke (20) umfaßt, daß der jeweilige Mitnahmezapfen (40) für einen Eingriff mit umfangsseitig am jeweiligen Antriebskranz (42) angeordneten Ausnehmungen (44) vorgesehen ist und daß das Filtermaterial (12) eines jeden Einzelelementes zwischen zwei Abdeckplatten (14) mit miteinander benachbart gegenüberliegenden Durchlässen (16) aufgenommen ist, die von dem Filtermaterial (12) abgedeckt sind.

2. Filtermaterial nach Anspruch 1, dadurch gekennzeichnet, daß die Abdeckplatten (14) thermoplastisch verarbeitbare Kunststoffe aufweisen.

3. Filtermittel nach Anspruch 2, dadurch gekennzeichnet, daß der Kunststoff aus einem Polyester mit Urethan oder aus einem Polyvinylchlorid oder aus einer Kombination dieser Materialien besteht.

4. Filtermittel nach Anspruch 2 oder 3, dadurch gekennzeichnet, daß die einander gegenüberliegenden und das jeweilige Filtermaterial (12) zwischen sich aufnehmenden Abdeckplatten (14) thermisch miteinander verschweißt sind.

## Claims

1. Filter means, consisting of a driveable flexible endless belt (10), which can be guided around guide rollers provided with at least one driving rim (42) and which is composed of individual elements, which respectively comprise a filter element consisting of a filter material (12) and which are respectively provided in the direction of travel (18) of the endless belt (10) on both sides with an angular end-piece (20), which is connected to the next end-piece (20) facing it, the end-pieces (20) connected to each other forming entrainment members (26) projecting beyond the endless belt (10), which entrainment members, on their two free ends, respectively comprise an entrainment pin (40), which is part of a guide part (38), characterised in that the guide part (38) comprises at least one roller (36) and a T-shaped fork member (30), whereof the ends of the fork comprise a pair of end-pieces (20) connected to each other, that the respective entrainment pin (40) is provided for engaging with recesses (44) arranged on the periphery of the respective driving rim (42) and that the filter material (12) of each individual element is received between two cover plates (14) with opposite openings (16) adjacent to each other, which are covered by the filter material (12).

2. Filter material according to Claim 1, characterised in that the cover plates (14) comprise synthetic materials which can be processed in a thermoplastic manner.

3. Filter means according to Claim 2, characterised in that the synthetic material consists of a polyester with urethane or of a polyvinylchloride or of a combination of these materials.

4. Filter means according to Claim 2 or 3, characterised in that the cover plates (14) lying opposite each other and receiving the respective filter material (12) therebetween are welded thermally to each other.

## Revendications

1. Moyen de filtration constitué d'une bande sans fin (10) flexible, pouvant être entraînée, qui est guidée autour de poulies de renvoi munies d'au moins une couronne d'entraînement (42), et qui est composée d'éléments individuels, lesquels présentent chacun un élément filtrant constitué en un matériau de filtration (12), et qui sont munis chacun, des deux côtés dans la direction d'avancement (18) de la bande sans fin (10), d'un élément terminal (20), lequel est relié à l'élément terminal (20) suivant orienté vers lui, tandis que lesdits éléments terminaux (20) mutuellement reliés forment des éléments d'entraînement (26) faisant saillie sur la bande sans fin (10), et présentent, sur leurs deux extrémités libres, respectivement, un pivot d'entraînement (40) qui est une partie de l'élément de guidage (38), caractérisé en ce que l'élément de guidage (38) présente au moins une roulette de déplacement (36) et une fourche en forme de T (30), les extrémités de cette fourche entourant une paire d'éléments terminaux (20) mutuellement reliés, en ce que le pivot d'entraînement respectif (40) est prévu pour un engrènement dans des encoches (44) disposées du côté du pourtour sur la couronne d'entraînement respectif (42), et en ce que le matériau de filtration (12) de chaque élément individuel, est logé entre deux plaques de recouvrement (14) présentant des trous (16), avoisinantes et mutuellement opposées, ces trous étant recouverts par le matériau de filtration (12).

2. Matériau de filtration selon la revendication 1, caractérisé en ce que les plaques de recouvrement (14) présentent des matières synthétiques permettant un traitement thermoplastique.

3. Moyen de filtration selon la revendication 2, caractérisé en ce que la matière synthétique est constituée en un polyester contenant de l'uréthane ou en un chlorure de polyvinyle, ou en une combinaison de ces deux matériaux.

4. Moyen de filtration selon la revendication 2 ou 3, caractérisé en ce que les plaques de recouvrement (14), se faisant face mutuellement, et logeant entre elles le matériau filtrant (12) respectif, sont assemblées mutuellement par soudage à chaud.
